# EUROPEAN PATENT APPLICATION

(11) **EP 3 770 750 A1**
(43) Date of publication of application: **27.01.2021**
(21) Application number: 20174706.0
(22) Date of filing: 14.05.2020
(51) Int. Cl.: G06F 7/58

(54) **ENTROPY GENERATOR AND METHOD OF GENERATING ENHANCED ENTROPY USING TRULY RANDOM STATIC ENTROPY**

(30) Priority: 25.07.2019 US 201962878725 P; 27.04.2020 US 202016858710
(71) Applicant: PUFsecurity Corporation, Hsinchu County 302 (TW)
(72) Inventor: Wu, Meng-Yi, 302 Hsinchu County (TW); Shao, Chi-Yi, 302 Hsinchu County (TW); Yang, Ching-Sung, 302 Hsinchu County (TW)
(74) Representative: Straus, Alexander

(57) **Abstract**

An entropy generator (1) includes a static entropy source (10), a dynamic entropy source (12(1)) and an entropy enhancement engine (14). The static entropy source (10) is used to provide a truly random static entropy (Es). The dynamic entropy source (12(1)) is used to generate a dynamic entropy (Ed(1)). The entropy enhancement engine (14) is coupled to the static entropy source (10) and the dynamic entropy source (12(1)), and is used to generate an enhanced entropy (Eout) according to the truly random static entropy (Es) and the dynamic entropy (Ed(1)).

## Description

### Field of the Invention

The disclosure relates to random number generation, and in particular, to an entropy generator and a method of generating enhanced entropy using truly random static entropy.

### Background of the Invention

Random numbers are widely used in the fields of information security and statistical sampling. Random numbers generation is generation of a sequence of unpredicted and independent numbers conforming to a specified distribution. A pseudo-random number generator generates the sequence of numbers using an entropy input, known as a seed. An insufficient random seed may lead to an insufficient random sequence. Therefore, choosing a sufficient random seed is important to generate a random sequence, ensuring secure data in information security applications and accurate sampling results in statistical sampling applications.

### Summary of the Invention

The present disclosure aims at providing an entropy generator and a method of generating enhanced entropy using truly random static entropy. This is achieved by an entropy generator according to claims 1 and 10. The dependent claims pertain to corresponding further developments and improvements.

As will be seen more clearly from the detailed description following below, the claimed entropy generator includes a static entropy source, a dynamic entropy source and an entropy enhancement engine. The static entropy source is used to provide a truly random static entropy. The dynamic entropy source is used to generate a dynamic entropy. The entropy enhancement engine is coupled to the static entropy source and the dynamic entropy source, and is used to generate an enhanced entropy according to the truly random static entropy and the dynamic entropy.

According to another embodiment of the invention, a method of generating an enhanced entropy for use in a device includes a static entropy source providing a truly random static entropy, a dynamic entropy source generating a dynamic entropy, and an entropy enhancement engine generating an enhanced entropy according to the truly random static entropy and the dynamic entropy.

### Brief Description of the Drawings

In the following, the invention is further illustrated by way of example, taking reference to the accompanying drawings. Thereof
FIG. 1 is a block diagram of an entropy generator according to an embodiment of the invention;
FIG. 2 is a block diagram of an exemplary dynamic entropy source of the entropy generator in FIG. 1;
FIG. 3 is a block diagram of a ring oscillator for use in the dynamic entropy source in FIG. 2;
FIG. 4 is a block diagram of another exemplary dynamic entropy source of the entropy generator in FIG. 1;
FIG. 5 is a block diagram of another exemplary dynamic entropy source of the entropy generator in FIG. 1;
FIG. 6 is a block diagram of another exemplary dynamic entropy source of the entropy generator in FIG. 1;
FIG. 7 is a timing diagram of the dynamic entropy source in FIG. 6; and
FIG. 8 is a flowchart of an enhanced entropy generation method according to an embodiment of the invention.

### Detailed Description

As used herein, the term "truly random" or "true random" refers to a bit stream that is substantially 50% in a hamming weight and an inter-device (ID) hamming distance, and is substantially 1 in a minimum entropy (min-entropy). The hamming weight measures an expected value of non-zero symbols in the bit stream in a percentage form. The ID hamming distance measures a hamming distance between two static entropy bit streams produced by two static entropy sources in response to an identical challenge. The min-entropy is a lower bound of entropy of the bit stream, measuring unpredictability of the bit stream.

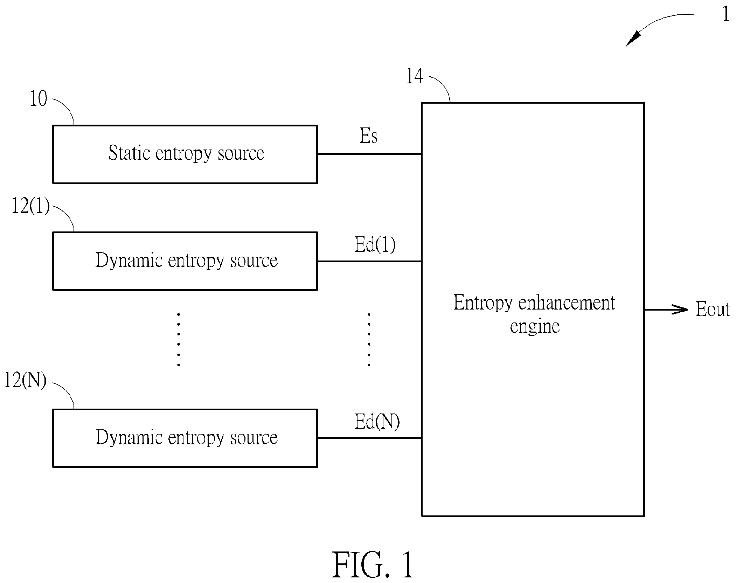

FIG. 1 is a block diagram of an entropy generator 1 according to an embodiment of the invention. The entropy generator 1 may provide an enhanced entropy Eout upon request of an external circuit. For example, the entropy generator 1 may provide the enhanced entropies Eout upon request of a deterministic random number generator for use to seed the same. The enhanced entropy Eout may be truly random and may be generated by mixing a truly random static entropy Es and a plurality of dynamic entropies Ed(1) to Ed(N). The truly random static entropy Es may be truly random bit stream, and the dynamic entropies Ed(1) to Ed(N) may or may not be truly random bit streams. Since mixing a truly random number with another random number would produce a truly random number, the enhanced entropy Eout may be a truly random regardless of the dynamic entropies Ed(1) to Ed(N) being truly random or not.

The entropy generator 1 may contain a static entropy source 10, dynamic entropy sources 12(1) to 12(N) and an entropy enhancement engine 14. The static entropy source 10 and the dynamic entropy sources 12(1) to 12(N) may be coupled to the entropy enhancement engine 14, N being a positive integer. For example, N is 2 for two dynamic entropy sources 121 and 122 in the entropy generator 1. While one static entropy source 10 and a plurality of dynamic entropy sources 12(1) to 12(N) are used in the embodiment, adopting two or more static entropy sources 10 and/or one dynamic entropy source 121 in the entropy generator 1 is also within the scope of the invention.

The static entropy source 10 may provide a truly random static entropy Es. The dynamic entropy sources 12(1) to 12(N) may generate dynamic entropies Ed(1) to Ed(N), respectively. The entropy enhancement engine 14 may generate the enhanced entropy Eout according to the truly random static entropy Es and the dynamic entropies Ed(1) to Ed(N). Specifically, the entropy enhancement engine 14 may mix the truly random static entropy Es and the dynamic entropies Ed(1) to Ed(N) in a bitwise manner to generate the enhanced entropy Eout. For example, each of the truly random static entropy Es and the dynamic entropies Ed(1) to Ed(N) may be 16 bits in length, and the entropy enhancement engine 14 may perform an XOR operation on corresponding bits of the truly random static entropy Es and the dynamic entropies Ed(1) to Ed(N) to generate a corresponding bit in the enhanced entropy Eout, thereby producing a 16-bit enhanced entropy Eout. The entropy enhancement engine 14 may include an XOR gate or a processor employing a data encryption standard (DES) algorithm, an advanced encryption standard (AES) algorithm or a hash function to perform mixing. In some embodiments, the entropy enhancement engine 14 may further include a pseudorandom number generator. The pseudorandom number generator may be a linear feedback shift register and may be seeded by the mixing output of the XOR gate or the processor to generate the truly random static entropy Es.

The static entropy source 10 may be a physically unclonable function (PUF), a non-volatile memory, or a fixed logic containing a plurality of truly random static entropy bits. For example, the physically unclonable function may be a 32-bit by 32-bit memory cells containing an entropy bit pool, and each row, column or diagonal line of the memory cells may contain truly random entropy bits. The entropy bit pool may include a plurality of entropy bits fixed in values and unique to each device employing the entropy generator 1. The physically unclonable function may output the truly random static entropy Es according to a predetermined selecting algorithm. For example, the physically unclonable function may select entropy bits from rows of cells in a predetermined row order to serve as the truly random static entropy Es. In some embodiments, the static entropy source 10 may be a pseudo random number generator (PRNG)(known as deterministic random bit generator(DRBG)) generating the truly random static entropy Es.

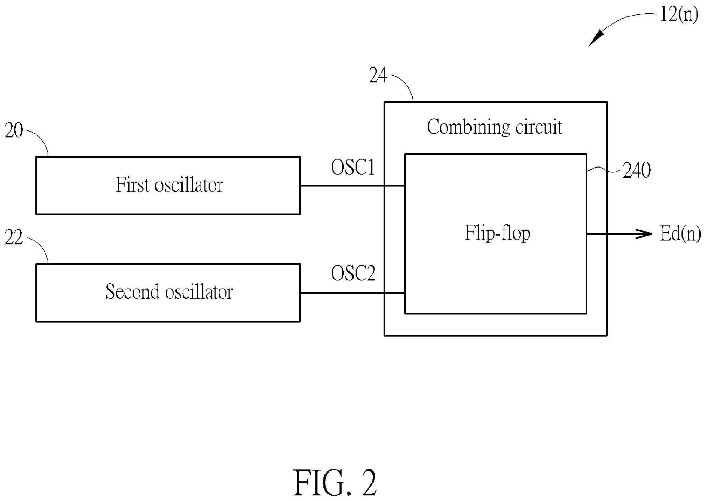

The dynamic entropy sources 12(1) to 12(N) may generate the respective dynamic entropies Ed(1) to Ed(N) in real time. FIG. 2 is a block diagram of an exemplary dynamic entropy source 12(n) of the entropy generator 1, n being an integer ranging between 1 and N. The dynamic entropy source 12(n) may include a first oscillator 20, a second oscillator 22 and a combining circuit 24. The combining circuit 24 may include a flip-flop 240. The first oscillator 20 and the second oscillator 22 may be coupled to the flip-flop 240.

The first oscillator 20 may generate a first oscillation signal OSC1 oscillating in a first frequency. The second oscillator 22 may generate a second oscillation signal OSC2 oscillating in a second frequency. The combining circuit 24 may combine the first oscillation signal OSC1 and the second oscillation signal OSC2 to generate a dynamic entropy Ed(n). The first oscillator 20 and the second oscillator 22 may be ring oscillators.

In some embodiments, the flip-flop 240 may sample the first oscillation signal OSC1 using the second oscillation signal OSC2, so as to generate the dynamic entropy Ed(n). In some embodiments, the first frequency and the second frequency are different, and each of the first frequency and the second frequency may be a multiple of prime numbers, misaligning level transitions of the first oscillation signal OSC1 and the second oscillation signal OSC2. For example, the first frequency may be 3MHz and the second frequency may be 5MHz. Since one prime number may not be fully divided by another prime number, the flip-flop 240 may sequentially generate the dynamic entropy Ed(n). In other embodiments, the first frequency and the second frequency are substantially equal, e.g., the first frequency and the second frequency may both be 3MHz. Since the devices, the routing and the voltage and operating temperature environment of the first oscillator 20 and the second oscillator 22 may not be fully identical, the first oscillation signal OSC1 and the second oscillation signal OSC2 may continuously race with each other to arrive the flip-flop 240, thereby sequentially generating an arbitrary "0" or logic level "1" as the dynamic entropy Ed(n).

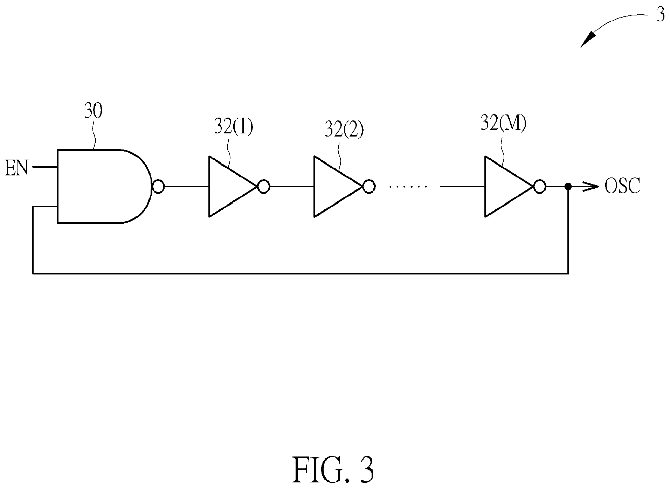

The first oscillator 20 and the second oscillator 22 may be implemented by the ring oscillator 3 in FIG. 3. The ring oscillator 3 may include a NAND gate 30 and a chain of inverters 32(1) to 32(M), M being an even number. The NAND gate 30 may be coupled to the first inverter 32(1), the inverters 32(1) to 32(M) may be sequentially coupled to each other, and the last inverter 32(M) may be coupled to the NAND gate 30.

The NAND gate 30 may receive an enabling signal EN to control activation of the ring oscillator 3 and output a NAND output. When the enabling signal EN is set at the logic level "0", the ring oscillator 3 is deactivated from generating an oscillation signal OSC. When the enabling signal EN is set at the logic level "1", the ring oscillator 3 is activated to generate the oscillation signal OSC. The frequency of the oscillation signal OSC may be determined by the total gate delay of the inverters 32(1) to 32(M). An increase in the total number of the inverters 32(1) to 32(M) may increase the total gate delay, reducing the frequency of the oscillation signal OSC.

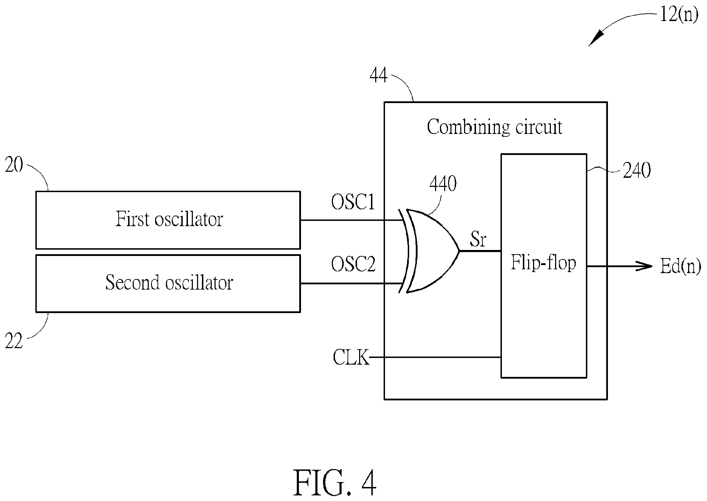

FIG. 4 is a block diagram of another exemplary dynamic entropy source 12(n) of the entropy generator in FIG. 1. The dynamic entropy source 12(n) in FIG. 4 is similar to FIG. 2, except that a combining circuit 44 in FIG. 4 may further include an XOR gate 440. The XOR gate 440 is coupled to the first oscillator 20, the second oscillator 22 and the flip-flop 240. The first frequency of the first oscillation signal OSC1 and the second frequency of the second oscillation signal OSC2 may be different, and each of the first frequency and the second frequency may be a multiple of prime numbers. The XOR gate 440 may perform an XOR operation on the first oscillation signal OSC1 and the second oscillation signal OSC2 to generate a random signal Sr. The flip-flop 240 may sample the random signal Sr using a clock signal CLK to generate the dynamic entropy Ed(n). The clock signal CLK may be generated by another oscillator internal or external to the entropy generator 1.

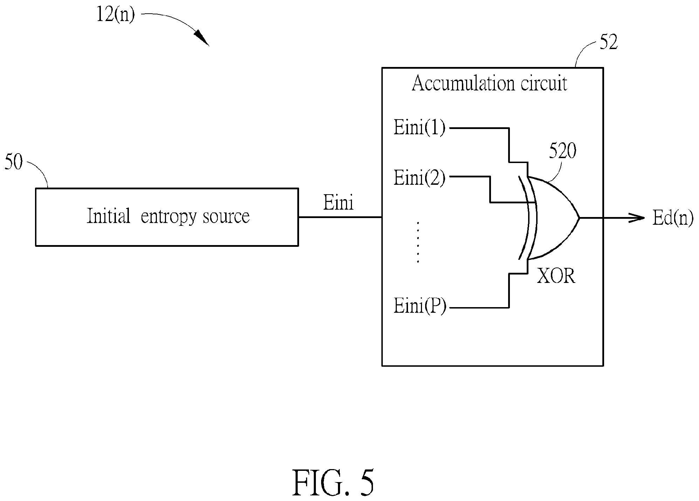

FIG. 5 is a block diagram of yet another exemplary dynamic entropy source 12(n) of the entropy generator in FIG. 1. The dynamic entropy sources 12(n) may include an initial entropy source 50 and an accumulation circuit 52 coupled thereto.

The initial entropy source 50 may generate an initial entropy Eini. The initial entropy Eini may a bit stream including a sequence of entropy bits Eini(1) to Eini(P) sequential in time, P being a positive integer, e.g., P may be 4. The initial entropy source 50 may be implemented by the first oscillator 20, the second oscillator 22 and the combining circuit 24 in FIG. 2, or the first oscillator 20, the second oscillator 22 and the combining circuit 44 in FIG. 4.

The accumulation circuit 52 may combine the entropy bits Eini(1) to Eini(P) into a bit in the dynamic entropy Ed(n). The accumulation circuit 52 may include an XOR gate 520 coupled to the initial entropy source 50. The XOR gate 520 may acquire the entropy bits Eini(1) to Eini(P) over a predetermined period of time, e.g., 4 clock cycles, and perform an XOR operation on the entropy bits Eini(1) to Eini(P) to generate the bit in the dynamic entropy Ed(n). That is, the accumulation circuit 52 may generate one bit every predetermined period of time. In this manner, the dynamic entropy source 12(n) in FIG. 5 may further increase the min-entropy of the dynamic entropy Ed(n) in comparison to those in FIGs. 2 and 4.

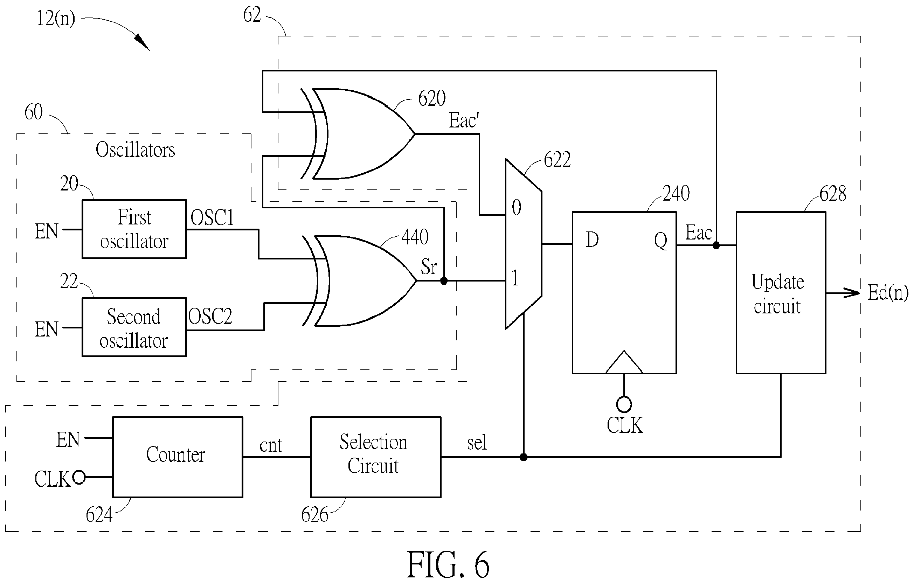

FIG. 6 is a block diagram of still another exemplary dynamic entropy source 12(n) of the entropy generator in FIG. 1. The dynamic entropy sources 12(n) may include an initial entropy source 60 and an accumulation circuit 62 coupled thereto. The initial entropy source 60 may generate a random signal Sr that carries a sequence of entropy bits. The accumulation circuit 62 may combine the sequence of entropy bits over a predetermined period of time, e.g., 4 clock cycles to generate a bit in the dynamic entropy Ed(n).

The initial entropy source 60 may include the first oscillator 20, the second oscillator 22 and the XOR gate 440. The configuration and operation of the first oscillator 20, the second oscillator 22 and the XOR gate 440 are similar to those in FIG. 4 and will not be repeated here. The accumulation circuit 62 may include an XOR gate 620, a multiplexer 622, a counter 624, a selection circuit 626, the flip-flop 240 and an update circuit 628. The XOR gate 620 may be coupled to the XOR gate 440. The counter 624 may be coupled to the selection circuit 626. The multiplexer 622 may be coupled to the XOR gate 440, the XOR gate 620 and the selection circuit 626. The flip-flop 240 may have an input data terminal D coupled to the multiplexer 622, a clock terminal configured to receive the clock signal, and an output data terminal Q. The update circuit 628 may be coupled to the selection circuit 626 and the output data terminal Q of the flip-flop 240.

The XOR gate 620 may sum an entropy bit in the random signal Sr and an accumulated entropy Eac to generate a new accumulated entropy Eac'. The accumulated entropy Eac may include accumulated entropy bits over the predetermined period of time. The multiplexer 624 may receive a selection signal sel from the selection circuit 626 to select one from the random signal Sr and the new accumulated entropy Eac' to generate a multiplexer output signal. In some embodiments, when the selection signal sel is set at the logic level "0", the multiplexer 624 may select the new accumulated entropy Eac' as the multiplexer output signal; and when the selection signal sel is set at the logic level "1", the multiplexer 624 may select the random signal Sr as the multiplexer output signal. The flip-flop 240 may sample the multiplexer output signal to generate the accumulated entropy Eac.

The update circuit 628 may update the dynamic entropy Ed(n) according to the accumulated entropy Eac at the first clock cycle of the predetermined period of time. In some embodiments, the update circuit 628 may be a switch selecting between the accumulated entropy Eac and the dynamic entropy Ed(n) according to the selection signal sel to generate the dynamic entropy Ed(n). When the selection signal sel is set at the logic level "1", the update circuit 628 may select the accumulated entropy Eac to update the dynamic entropy Ed(n), and when the selection signal sel is set at the logic level "0", the update circuit 628 may maintain the voltage level in the dynamic entropy Ed(n) without updating. In this fashion, the update circuit 628 may update the dynamic entropy Ed(n) once every predetermined period of time.

The counter 624 may be enabled by the enabling signal EN, and may be a ring counter updating a counting signal cnt upon each clock pulse of the clock signal CLK. The counting signal cnt may count the predetermined period of time. The selection circuit 626 may generate the selection signal sel according to the counting signal cnt. Upon the first clock cycle of the predetermined period of time, the selection circuit 626 may set the selection signal sel to be the logic level "1", so as to reset the accumulated entropy Eac and update the dynamic entropy Ed(n). The dynamic entropy source 12(n) in FIG. 6 may further increase the min-entropy of the dynamic entropy Ed(n) in comparison to those in FIGs. 2 and 4.

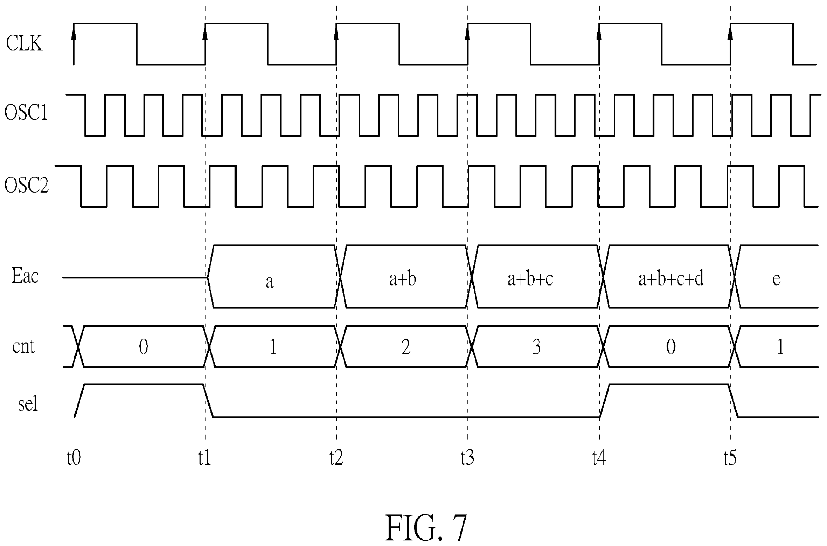

FIG. 7 is a timing diagram of the dynamic entropy source 12(n) in FIG. 6, showing waveforms of the clock signal CLK, the first oscillation signal OSC1, the second oscillation signal OSC2, the counting signal cnt, the selection signal sel and the accumulated entropy Eac.

At Time t0, the counting signal cnt starts at a data state "0", the selection signal sel is set to the logic level "1" to select the random signal Sr as the multiplexer output signal. At Time t1, the counting signal cnt proceeds to a data state "1", the random signal Sr has the first data "a", "a" being the sum of the values of the first oscillation signal OSC1 and the second oscillation signal OSC2 at Time t1, the flip-flop 240 samples the first data "a" in the multiplexer output signal to update the accumulated entropy Eac, and then the selection signal sel is set to the logic level "0" to select the new accumulated entropy Eac' as the multiplexer output signal. At Time t2, the counting signal cnt proceeds to a data state "2", the new accumulated entropy Eac' has second data "a+b", "b" being the sum of the values of the first oscillation signal OSC1 and the second oscillation signal OSC2 at Time t2, the flip-flop 240 samples the second data "a+b" in the multiplexer output signal to update the accumulated entropy Eac, and then the selection signal sel remains at the logic level "0" to select the new accumulated entropy Eac' as the multiplexer output signal. At Time t3, the counting signal cnt proceeds to a data state "3", the new accumulated entropy Eac' has third data "a+b+c", "c" being the sum of the values of the first oscillation signal OSC1 and the second oscillation signal OSC2 at Time t3, the flip-flop 240 samples the third data "a+b+c" in the multiplexer output signal to update the accumulated entropy Eac, and then the selection signal sel remains at the logic level "0" to select the new accumulated entropy Eac' as the multiplexer output signal. At Time t4, the counting signal cnt recirculates to the data state "0", the new accumulated entropy Eac' has fourth data "a+b+c+d", "d" being the sum of the values of the first oscillation signal OSC1 and the second oscillation signal OSC2 at Time t4, the flip-flop 240 samples the fourth data "a+b+c+d" in the multiplexer output signal to update the accumulated entropy Eac, and then the selection signal sel is set to the logic level "0" to select the random signal Sr as the multiplexer output signal. At Time t5, the counting signal cnt proceeds to the data state "1", the random signal Sr has fifth data "e", the flip-flop 240 samples the fifth data "e" in the multiplexer output signal to update the accumulated entropy Eac, and then the selection signal sel is set to the logic level "0" to select the new accumulated entropy Eac' as the multiplexer output signal.

The entropy generator 1 employs the truly random static entropy Es and the dynamic entropies Ed(1) to Ed(N) to provide true randomness and dynamic randomness of the enhanced entropy Eout, thereby delivering data security to devices using the entropy generator 1.

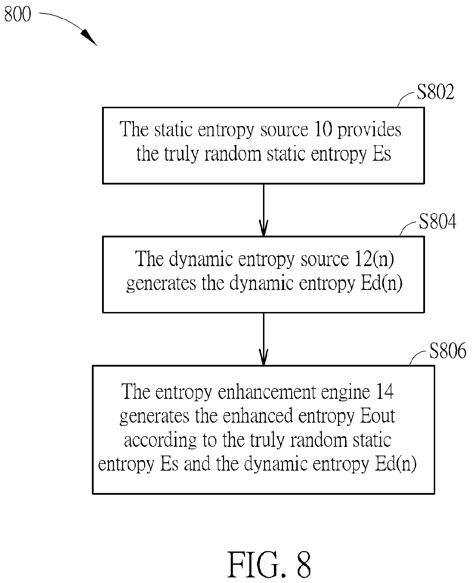

FIG. 8 is a flowchart of an enhanced entropy generation method 800 according to an embodiment of the invention. The method 800 includes Steps S802 to S806, generating the enhanced entropy Eout using the truly random static entropy Es and the dynamic entropy Ed(n). Any reasonable step change or adjustment is within the scope of the disclosure. Steps S802 to S806 are explained as follows:

| | |
|---|---|
| Step S802: | The static entropy source 10 provides the truly random static entropy Es; |
| Step S804: | The dynamic entropy source 12(n) generates the dynamic entropies Ed(n); |
| Step S806: | The entropy enhancement engine 14 generates the enhanced entropy Eout according to the truly random static entropy Es and the dynamic entropy Ed(n). |

The details of the method 800 have been explained in the preceding paragraphs, and will not be repeated here. The method 800 employs the truly random static entropy Es and the dynamic entropies Ed(n) to provide true randomness and dynamic randomness of the enhanced entropy Eout, thereby delivering data security to a secure device.

## Claims

1. An entropy generator (1), **characterized by** comprising:
a static entropy source (10) configured to provide a truly random static entropy (Es);
a dynamic entropy source (12(1)) configured to generate a dynamic entropy (Ed(1)); and
an entropy enhancement engine (14) coupled to the static entropy source (10) and the dynamic entropy source (12(1)), and configured to generate an enhanced entropy (Eout) according to the truly random static entropy (Es) and the dynamic entropy (Ed(1)).

2. The entropy generator (1) of Claim 1, wherein the truly random static entropy (Es) has a hamming weight of substantially 50%, a hamming distance of substantially 50% and a min-entropy of substantially 1.

3. The entropy generator (1) of Claim 1 or 2, wherein the dynamic entropy source (12(n)) comprises:
an initial entropy source (50) configured to generate a sequence of entropy bits (Eini(1) to Eini(P)) sequential in time; and
an accumulation circuit (52) coupled to the initial entropy source (50) and configured to combine the sequence of entropy bits (Eini(1) to Eini(P)) into a bit in the dynamic entropy (Ed(n)).

4. The entropy generator (1) of Claim 3, wherein:
the initial entropy source (60) comprises:
a first oscillator (20) configured to generate a first oscillation signal (OSC1) oscillating in a first frequency;
a second oscillator (22) configured to generate a second oscillation signal (OSC2) oscillating in a second frequency different from the first frequency; and
a first XOR gate (440) coupled to the first oscillator (20) and the second oscillator (22), and configured to combine the first oscillation signal (OSC1) and the second oscillation signal (OSC2) to sequentially generate the sequence of entropy bits; and
the accumulation circuit (62) comprises a second XOR gate (620) coupled to the first XOR gate (440) and configured to combine the sequence of entropy bits over a predetermined period of time to generate the bit in the dynamic entropy (Ed(n)).

5. The entropy generator (1) of Claim 1 or 2, wherein the dynamic entropy source (12(n)) comprises:
a first oscillator (20) configured to generate a first oscillation signal (OSC1) oscillating in a first frequency;
a second oscillator (22) configured to generate a second oscillation signal (OSC2) oscillating in a second frequency; and
a combining circuit (24) coupled to the first oscillator (20) and the second oscillator (22), and configured to combine the first oscillation signal (OSC1) and the second oscillation signal (OSC2) to generate the dynamic entropy (Ed(n)).

6. The entropy generator (1) of Claim 5, wherein the first frequency and the second frequency are different.

7. The entropy generator (1) of Claim 5, wherein the first frequency and the second frequency are substantially equal.

8. The entropy generator (1) of Claim 5, wherein the combining circuit (24) comprises a flip-flop (240) configured to sample the first oscillation signal (OSC1) using the second oscillation signal (OSC2) to generate the dynamic entropy (Ed(n)).

9. The entropy generator (1) of any of the preceding claims, wherein the static entropy source (10) is derived from a physically unclonable function.

10. A method of generating enhanced entropy (Eout) for use in a device, **characterized by** comprising:
providing, by a static entropy source (10), a truly random static entropy (Es);
generating, by a dynamic entropy source (12(1)), a dynamic entropy (Ed(1)); and
generating, an entropy enhancement engine (14), an enhanced entropy (Eout) according to the truly random static entropy (Es) and the dynamic entropy (Ed(1)).

11. The method of Claim 10, wherein the truly random static entropy (Es) has a hamming weight of substantially 50%, a hamming distance of substantially 50% and a min-entropy of substantially 1.

12. The method of Claim 10 or 11, wherein generating, by the dynamic entropy source (12(n)), the dynamic entropy (Ed(n)) comprises:
generating a sequence of entropy bits (Eini(1) to Eini(P)) sequential in time; and
combining the sequence of entropy bits (Eini(1) to Eini(P)) into a bit in the dynamic entropy (Ed(n)).

13. The method of Claim 12, wherein:
generating the sequence of entropy bit comprises:
generating, by a first oscillator (20), a first oscillation signal (OSC1) oscillating in a first frequency;
generating, by a second oscillator (22), a second oscillation signal (OSC2) oscillating in a second frequency different from the first frequency; and
combining, by a first XOR gate (440), the first oscillation signal (OSC1) and the second oscillation signal (OSC2) to sequentially generate the sequence of entropy bits; and
accumulating the sequence of entropy bits into the bit in the dynamic entropy (Ed(n)) comprises:
combining, by a second XOR gate (620), the sequence of entropy bits over a predetermined period of time to generate the bit in the dynamic entropy (Ed(n)).

14. The method of Claim 10 or 11, wherein generating, by the dynamic entropy source (12(n)), the dynamic entropy (Ed(n)) comprises:
generating, by a first oscillator (20), a first oscillation signal (OSC1) oscillating in a first frequency;
generating, by a second oscillator (22), a second oscillation signal (OSC2) oscillating in a second frequency; and
combining, by a combining circuit (24), the first oscillation signal (OSC1) and the second oscillation signal (OSC2) to generate the dynamic entropy (Ed(n)).

15. The method of Claim 14, wherein the first frequency and the second frequency are different.

16. The method of Claim 14, wherein the first frequency and the second frequency are substantially equal.

17. The method of Claim 14, wherein the combining circuit (24) comprises a flip-flop (240), and combining, by the combining circuit (24), the first oscillation signal (OSC1) and the second oscillation signal (OSC2) to generate the dynamic entropy (Ed(n)) comprises:
sampling, by the flip-flop (240), the first oscillation signal (OSC1) using the second oscillation signal (OSC2) to generate the dynamic entropy (Ed(n)).

18. The method of any of Claims 10 to 17, wherein the static entropy source (10) is a physically unclonable function.
